# FASCICULE DE BREVET EUROPEEN

(11) **EP 1 209 964 B1**
(45) Date de publication et mention de la délivrance du brevet: **18.12.2002**
(21) Numéro de dépôt: 00958760.1
(22) Date de dépôt: 31.08.2000
(51) Int. Cl.: A01G 13/02

(54) **DISPOSITIF POUR LA POSE D'UN FILM PLASTIQUE OU SIMILAIRE, NOTAMMENT A USAGE AGRICOLE**
VERFAHREN ZUM AUFLEGEN EINER KUNSTSTOFFFOLIE ODER DERGLEICHEN, INSBESONDERE ZUM LANDWIRTSCHAFTLICHEN GEBRAUCH
DEVICE FOR SETTING A PLASTIC FILM OR THE LIKE, IN PARTICULAR FOR AGRICULTURAL PURPOSES

(30) Priorité: 10.09.1999 FR 9911366
(43) Date de publication de la demande: 05.06.2002
(73) Titulaire: Mainguy, Yannick, 44450 La Chapelle Basse Mer (FR); Cadiou, Yves, 44450 La Chapelle Basse Mer (FR)
(72) Inventeur: Mainguy, Yannick, 44450 La Chapelle Basse Mer (FR); Cadiou, Yves, 44450 La Chapelle Basse Mer (FR)
(74) Mandataire: Laget, Jean-Loup
(86) Numéro de dépôt international: FR0002408
(87) Numéro de publication internationale: WO01019167

(56) Documents cités:
- WO-A-97/31523
- BE-A- 640 532
- CH-A- 596 748
- FR-A- 2 235 642
- FR-A- 2 693 625
- NL-C- 1 004 219
- US-A- 4 771 570

## Description

La présente invention concerne un dispositif pour la pose d'un film plastique ou similaire, directement sur le sol ou sur un autre support.

L'invention trouve notamment son application dans le domaine agricole où de tels dispositifs sont par exemple utilisés pour le positionnement de films plastiques à même le sol ou sur des arceaux pour former des tunnels de culture. On notera toutefois que l'agriculture n'est pas l'unique domaine d'application de l'invention qui pourra être utilisée dans d'autres secteurs d'activité nécessitant la pose au sol de bandes de matériau souple.

Les films plastiques en question sont utilisés notamment afin de permettre une optimisation de l'irrigation et des traitements par pulvérisation et pour préserver les cultures des éléments ou des organismes nuisibles. Ces films sont constitués de matériaux souples, tels que le polyéthylène, et présentent généralement une faible épaisseur qui, en laissant passer le rayonnement solaire, permet de développer un effet de serre et d'augmenter ainsi la température de culture. Les tunnels constitués d'arceaux, sur lesquels est positionné un film transparent, sont ainsi notamment très utilisés pour les cultures maraîchères tandis que l'utilisation de film déroulé à même le sol intervient dans les cultures classiques et dans certaines cultures spécifiques telles que la culture des asperges, des melons, des fraises, etc. Dans le cas de la pose des films plastiques agricoles directement sur le sol, celui-ci peut être conformé en buttes formant paillage de façon à faciliter le calage du film. Les machines dérouleuses sont également utilisées pour dérouler d'autres matériaux souples que les films plastiques tels que par exemple des grillages souples ou des filets d'ombrage. De tels filets d'ombrage sont utilisés pour les cultures de végétaux craignant un trop fort ensoleillement tel que la culture de mâche.

Le procédé d'utilisation mis en oeuvre par de telles machines dérouleuses de film plastique ou de matériaux similaires consiste à tirer le film d'une bobine de stockage, à disposer celui-ci sur le sol ou sur des arceaux tout en le maintenant tendu et à enterrer les bords du film de façon à ce que celui-ci reste tendu après la pose. Il est en effet impératif que le film, une fois posé, ne se soulève pas et n'offre pas de prise au vent afin de pouvoir remplir pleinement ses fonctions.

On connaît déjà par les documents FR-A-2.693.625, FR-A-2.235.642, US-A-4.771.570 et BE-640.532 des machines dérouleuses de films ou de toiles utilisées en particulier dans le domaine agricole. Ces machines, qui peuvent être tractées par un engin à moteur, sont toutes conçues de la même manière. En effet, ces machines comprennent au moins un châssis se déplaçant sur le sol, ce châssis étant équipé de deux rangées d'outils parallèles écartées l'une de l'autre d'une distance correspondant sensiblement à la largeur de la surface à recouvrir d'un film. Chaque rangée d'outils est constituée successivement de l'avant vers l'arrière du châssis, pris dans le sens d'avancement du châssis, d'un organe d'ouverture d'un sillon dans le sol, d'un organe rotatif circulaire de positionnement d'un bord latéral du film dans ledit sillon et d'un organe de fermeture du sillon. Les organes d'ouverture du sillon sont généralement constitués par des socs ou des disques concaves conçus et disposés de manière à creuser deux sillons parallèles. Les organes rotatifs circulaires de positionnement d'un bord latéral du film dans ledit sillon ménagé dans le sol sont généralement constitués par deux roues équipées de pneumatique, ces roues constituant également les roues porteuses du châssis. Ces roues présentent généralement un pincement orienté dans le sens de déplacement du dispositif et une inclinaison divergente de façon à favoriser le calage des bords latéraux du film dans les sillons ménagés par les socs. Ces organes de positionnement du film sont suivis par des organes de fermeture du sillon généralement constitués par un soc de charrue ou à nouveau par un disque concave de préférence incliné. Ces organes de fermeture du sillon fonctionnent en rejetant la terre sur les bords du film déposés dans le sillon de manière à refermer le sillon. Le bord du film se trouve ainsi déposé à plat à l'intérieur dudit sillon. Ces machines présentent plusieurs inconvénients liés au choix des organes d'ouverture et de fermeture des sillons ainsi qu'à la conception de l'organe de positionnement du film dans le sol. En effet, la réalisation de sillons au moyen d'un soc ou d'un disque concave génère une modification importante de la structure du sol. De la terre est rejetée en dehors du sillon et vient encombrer les chemins qui constituent des passages pour d'autres engins. Ces modifications de la structure du sol sont à nouveau observées lorsque la terre est replacée sur le film par les organes de fermeture du sillon. Par ailleurs, lorsqu'il est nécessaire de retirer le film du sol, toute la terre qui repose sur les bords du film doit être enlevée. Il en résulte à nouveau un bouleversement de la surface du sol.

On connaît enfin par le brevet NL-C-1.004.219 un dispositif pour la pose d'un filet du type constitué d'un châssis roulant équipé de deux rangées d'outils constituées respectivement d'un organe d'ouverture d'une tranchée dans le sol et d'un organe de positionnement du filet dans la tranchée, un rouleau étant interposé entre lesdits organes pour permettre le déroulement et la pose du filet au sol. L'inconvénient d'un tel dispositif résulte dans le fait qu'il ne peut fonctionner que dans des terrains durs non ameublis. En effet, en raison de la distance séparant les organes d'ouverture de tranchée et de positionnement du filet, due à l'interposition d'un rouleau, la fente est automatiquement comblée au moment où l'organe de positionnement du filet dans la fente entre en action de telle sorte qu'un positionnement correct du bord du filet dans la fente est impossible.

Le but principal de la présente invention est de proposer un dispositif pour la pose d'un film plastique ou similaire dont la conception permet de limiter les bouleversements du sol à la fois au cours des opérations de pose du film dans le sol et au cours des opérations d'enlèvement du film du sol, ces opérations pouvant s'effectuer dans tout type de sol.

A cet effet, l'invention a pour objet un dispositif pour la pose d'un film plastique ou similaire, notamment à usage agricole, ce dispositif comprenant un châssis se déplaçant sur le sol, ce châssis étant équipé de deux rangées d'outils parallèles, écartées l'une de l'autre d'une distance correspondant sensiblement à la largeur de la surface à recouvrir d'un film, chaque rangée d'outils étant constituée successivement de l'avant vers l'arrière du châssis, pris dans le sens d'avancement du châssis, d'un organe d'ouverture d'une tranchée dans le sol, d'un organe rotatif circulaire de positionnement d'un bord latéral du film dans ladite tranchée par contact d'appui sur ledit film et d'un organe de fermeture de la tranchée, caractérisé en ce que les organes d'ouverture de la tranchée sont constitués respectivement par un organe, tel qu'un coutre ou un disque droit équipé d'au moins un bord ou d'une arête de coupe agencé(e) pour découper sensiblement verticalement le sol lors de l'avancement du châssis de manière à délimiter, dans le sol, une fente formant tranchée, ces organes d'ouverture de la tranchée étant disposés sensiblement alignés avec les organes de positionnement du film constitués de disques droits à plans de rotation sensiblement parallèles pour permettre, lors de la pénétration axiale des disques dans les fentes, par contact d'appui de la tranche du disque avec le film, la dépose des bords latéraux du film à l'état replié dans ladite fente, ces organes rotatifs circulaires de positionnement du film dans le sol coopérant avec des moyens permettant de positionner directement le film, stocké à l'état bobiné, sur lesdits organes rotatifs, de sorte que ces organes rotatifs de positionnement du film constituent en outre des moyens d'entraînement et de déroulement du film lors d'un entraînement en rotation desdits organes rotatifs de positionnement provoqué par l'avancement du châssis.

Grâce à la conception des organes d'ouverture de tranchée fendant le sol pour délimiter une simple fente formant tranchée, le sol n'est pas bouleversé. De même, grâce à la conception de l'organe rotatif de pose du film dans la fente, qui permet de replier le bord latéral du film à l'intérieur de la fente à la manière d'un ourlet non cousu, le film est parfaitement maintenu dans ladite fente. Malgré ce maintien sûr, l'enlèvement du film s'effectue sans difficulté et sans brassage de terre. Enfin, grâce à la polyvalence de l'organe rotatif qui constitue à la fois un organe de déroulement, d'entraînement et de positionnement du film, ce dernier peut être positionné immédiatement derrière l'organe d'ouverture de fente de sorte que tout comblement de la fente est évité, y compris dans un sol meuble.

L'invention sera bien comprise à la lecture de la description suivante d'exemples de réalisation, en référence aux dessins annexés dans lesquels :
la figure 1 représente une vue en perspective d'un dispositif pour le déroulement et la pose d'un film plastique ou d'un matériau similaire, ledit dispositif étant représenté sans bobine de film ;
la figure 2 représente une vue schématique de face des outils du dispositif représenté à la figure 1 au cours d'une opération de pose d'un film plastique sur des buttes formant paillage constituant la surface à recouvrir ;

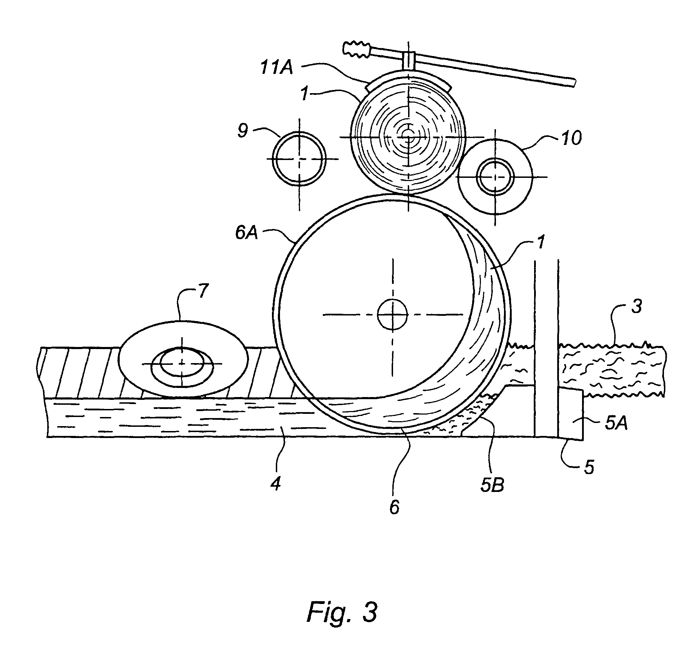

la figure 3 représente une vue schématique latérale du dispositif montré à la figure 1 au cours d'une opération de pose d'un film plastique à nouveau sur une butte formant paillage du sol ;

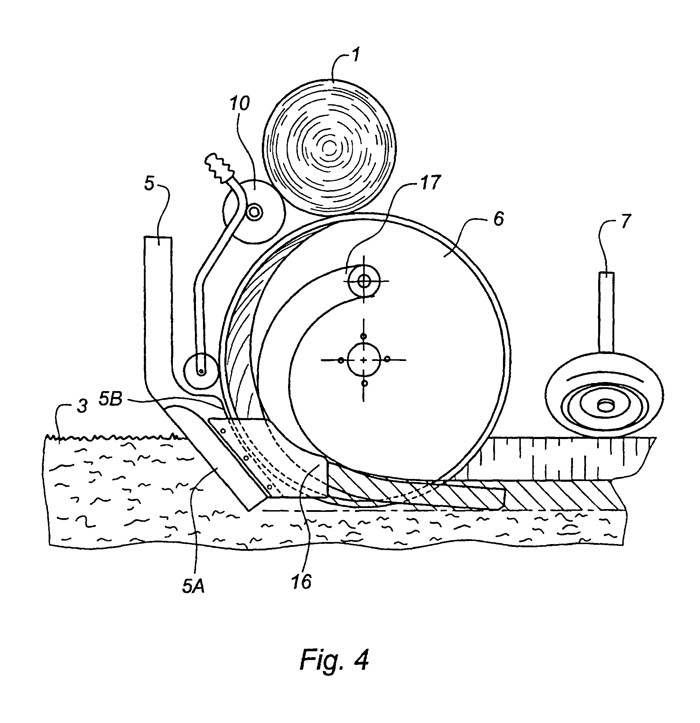

la figure 4 représente une vue schématique partielle latérale d'une variante du dispositif, objet de l'invention et
la figure 5 représente une vue de détail de la liaison du bras au châssis.

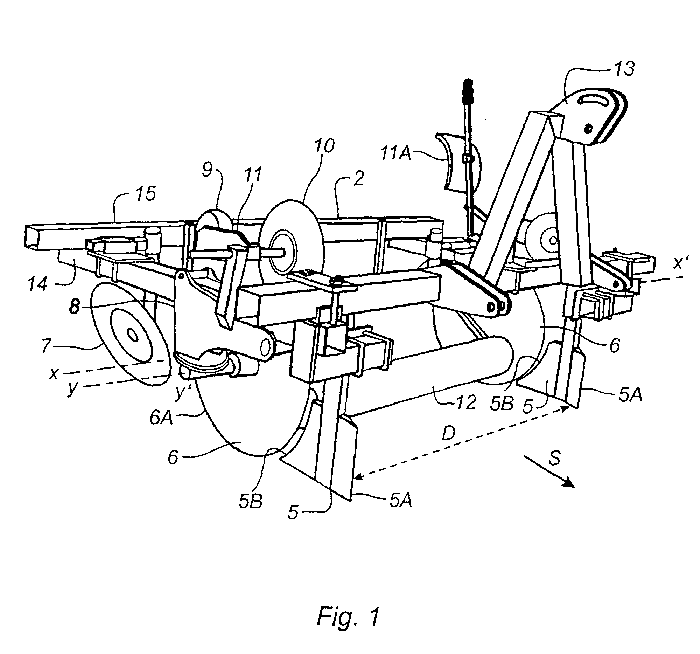

Le dispositif pour la pose d'un film plastique ou similaire, objet de l'invention, comprend, comme le montre la figure 1, un châssis 2 métallique. Ce châssis 2 est essentiellement constitué de deux longerons 14 et de deux traverses 15. L'écartement entre les deux traverses 15 peut être réglé de façon à adapter la largeur de travail du dispositif à la largeur du sol à couvrir. Un dispositif d'attelage 13 est monté sur le châssis de façon à ce que celui-ci puisse être solidarisé à un engin moteur tel qu'un tracteur.

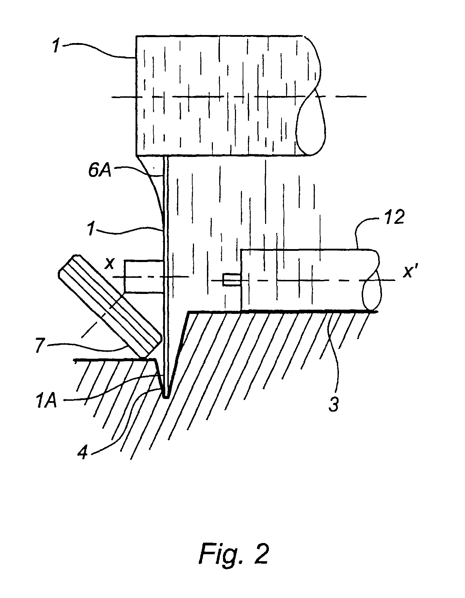

Ce châssis est équipé de deux rangées d'outils parallèles écartées l'une de l'autre d'une distance correspondant sensiblement à la largeur de la surface 3 à recouvrir d'un film 1. Ces outils sont généralement portés par les longerons 14 du châssis 2. Chaque rangée d'outils est constituée successivement de l'avant vers l'arrière du châssis 2, pris dans le sens S d'avancement du châssis 2, d'un organe 5 d'ouverture d'une tranchée dans le sol, d'un organe 6 rotatif circulaire de positionnement d'un bord latéral 1A du film 1 dans ladite tranchée par contact d'appui sur ledit film 1 et d'un organe 7 de fermeture de la tranchée. Les organes 5 d'ouverture d'une tranchée dans le sol, disposés à l'avant du châssis, sont constitués respectivement par un organe, tel qu'un coutre ou un disque droit équipé d'au moins un bord ou d'une arête de coupe agencé(e) pour découper sensiblement verticalement le sol lors de l'avancement du châssis 2 de manière à délimiter, dans le sol, une fente 4, comme le montre la figure 2, cette fente 4 formant tranchée.

Ces organes de coupe sont positionnés de manière réglable en hauteur sur le châssis 2 en vue de sélectionner la profondeur de la fente devant être réalisée. Lors de la mise en oeuvre du dispositif, ces organes 5 de coupe, disposés de part et d'autre de l'axe médian du dispositif, tracent dans le sol des fentes d'une profondeur calculée pour accueillir les bords latéraux 1A d'un film plastique 1. Par bord latéral du film plastique, on entend la portion latérale du film plastique qui jouxte le bord longitudinal libre du film. Cette portion peut être de largeur variable notamment en fonction de la profondeur choisie pour la fente 4.

Le dispositif comporte encore deux organes 6 rotatifs circulaires de positionnement d'un bord latéral 1A du film dans ladite tranchée. Ces organes 6 de positionnement du film 1 sont constitués de disques droits à plans de rotation parallèles pour permettre, lors de la pénétration axiale des disques 6 dans les fentes 4, par contact d'appui de la tranche 6A du disque 6 avec le film 1, la dépose des bords latéraux 1A du film 1 à l'état replié dans ladite fente 4. En effet, comme le montrent clairement les figures, les organes de coupe 5, en particulier les bords d'attaque tranchants 5A de ces organes de coupe et les organes rotatifs 6 de positionnement du film, en particulier la tranche de ces organes 6 rotatifs sont positionnés sensiblement dans un même plan vertical de sorte que la fente 4 réalisée par les organes de coupe 5 est pénétrée axialement par les organes 6 de positionnement du film. La tranche 6A de ces organes 6 de positionnement de film constitués par des disques droits à plan de rotation parallèle est recouverte par le bord 1A latéral du film. Au cours de son entraînement en rotation, la tranche 6A vient en contact d'appui sur le bord 1A latéral du film 1 et applique ce film contre le fond de la fente 4 réalisée par l'organe de coupe 5. Le bord latéral du film forme alors, à l'intérieur de ladite fente 4, sensiblement un V. Ce repli s'apparente à un ourlet non cousu. Il est à noter que par disques droits, on entend des disques dont les faces latérales sont planes contrairement aux disques concaves et convexes dont les faces latérales sont courbes.

Comme le montre la figure 1, chaque organe 6 rotatif circulaire de positionnement de film 1 dans une fente 4 du sol formant tranchée est relié au châssis par l'intermédiaire d'un organe de liaison, tel qu'un bras 8, monté à pivotement autour d'un axe XX' parallèle à l'axe YY' de rotation de l'organe 6 rotatif circulaire. Ce montage à pivotement libre permet à l'organe 6 rotatif circulaire de suivre parfaitement le profil de la fente 4 formant tranchée.

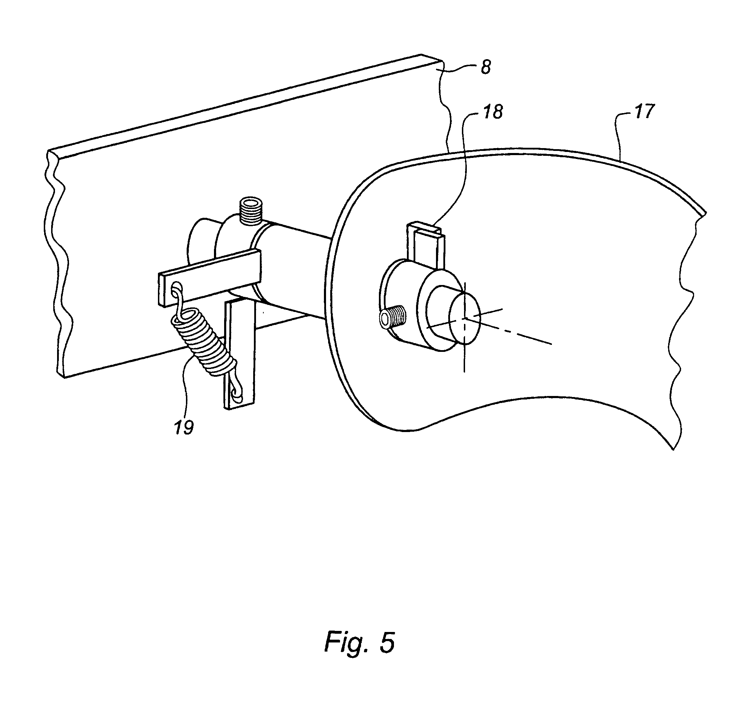

Dans certaines configurations, l'organe 6 rotatif circulaire de positionnement de film 1 dans une fente 4 est doublé extérieurement d'un bras 17 courbe conformé pour venir en appui dans la fente 4 formant tranchée. Ce bras 17 oscillant, monté à pivotement autour d'un axe parallèle à l'axe YY' de rotation de l'organe 6 rotatif, est rappelé en position d'appui par l'intermédiaire d'un organe approprié. Ce bras 17 est réalisé en une tôle mince de sorte que disque 6 et bras 17 présentent une épaisseur au plus égale à la largeur de la fente 4 ménagée par l'organe 5. Comme le montre la figure 5, le bras 17, susceptible d'osciller le long de la face latérale plane extérieure du disque 6, est limité dans son déplacement d'une part par l'intermédiaire d'une butée 18, d'autre part par un ressort 19. Il est à noter que ce bras tourne autour d'un axe solidaire du bras 8 reliant le disque 6 au châssis 2. Ce bras 17 a pour fonction d'empêcher la remontée du film 1 derrière le disque 6 avant le passage de l'organe 7 de fermeture de la fente, remontée qui tendrait à modifier la profondeur d'enfouissement du film ainsi que sa tension.

De préférence et comme le montre la figure 1, chaque organe 5 d'ouverture d'une tranchée est un coutre dont le profil du bord 5A arrière est courbe, le centre de l'arc de cercle définissant la courbe du bord 5B arrière du coutre étant commun et sensiblement identique au centre de l'arc de cercle définissant la frontière du disque 6 rotatif circulaire de positionnement d'un bord latéral du film 1 dans une fente 4 formant tranchée de manière à éviter tout comblement de la fente 4 entre organe 5 d'ouverture de tranchée et organe 6 de positionnement du film 1 au cours de l'avancement du châssis 2.

En effet, bien qu'il ait été mentionné ci-dessus que l'organe 5 d'ouverture d'une tranchée pouvait être constitué par un disque droit, il ne peut être exclu le risque de voir la fente réalisée par l'organe de coupe 5 comblée avant le passage du disque 6 dans ladite fente. Pour cette raison, la solution représentée à la figure 1 est préférée.

De la même manière, de préférence, chaque organe 5 d'ouverture d'une tranchée est un coutre dont le bord d'attaque 5A ou arête de coupe s'étendant dans un plan vertical est incliné vers l'arrière du châssis 2 en direction de l'organe 6 de positionnement du film 1. En effet, bien qu'un coutre à bord d'attaque vertical droit puisse être utilisé comme le montre la figure 1, un coutre à bord d'attaque vertical incliné en direction de l'arrière du châssis est préféré de manière à assurer un bon découpage du sol tout en évitant le soulèvement de la couche supérieure du sol et la projection de mottes ou de cailloux. Enfin, de préférence, chaque organe 5 d'ouverture d'une tranchée est muni sur son côté externe d'un déflecteur 16 agencé pour recouvrir au moins partiellement un secteur circulaire dit actif du plan circulaire externe de l'organe 6 rotatif circulaire de positionnement du film 1 de manière à retenir la terre et l'empêcher de descendre le long dudit organe 6 de positionnement du film 1.

Les organes 6 rotatifs circulaires de positionnement du film dans le sol coopèrent encore avec des moyens 9, 10, 11 permettant de positionner directement le film, stocké à l'état bobiné, sur lesdits organes 6 rotatifs, de sorte que ces organes 6 rotatifs de positionnement du film constituent en outre des moyens d'entraînement et de déroulement du film 1 lors d'un entraînement en rotation desdits organes 6 rotatifs de positionnement provoqué par l'avancement du châssis 2. Ces moyens permettant de positionner directement le film stocké à l'état bobiné sur les organes 6 rotatifs sont constitués par deux jeux de roues de blocage 9 et deux jeux de roues 10 positionnés respectivement sur la partie arrière et la partie avant du bras 8 de liaison de l'organe 6 au châssis. Les roues de blocage 9 ont pour effet de maintenir une bobine d'un matériau souple à dérouler en place lorsque celle-ci est positionnée directement sur la tranche des disques 6 au-dessus de ces derniers. Ces disques 6 font alors office de moyens de déroulement et d'entraînement du film issu de la bobine. Comme mentionné précédemment, le dispositif représenté à la figure 1 peut être utilisé pour le déroulement et la pose d'un film à même le sol ou sur des arceaux destinés à constituer avec ce film plastique des tunnels de culture.

Pour parfaire le maintien de la bobine, des plaques 11 de blocage sont positionnées sur le bras 8 de liaison de l'organe 6 au châssis 2 du dispositif de déroulement de façon à venir en contact et à maintenir la bobine au niveau de ses faces latérales. Une plaque courbe représentée en 11A aux figures montée fixe sur un levier pivotant peut compléter ces moyens de maintien de la bobine en position sur les disques 6. Cette plaque 11A sert également de frein au déroulement du film. Grâce à ce positionnement de la bobine directement sur les disques 6, on obtient une longueur de film déroulée directement en rapport avec la vitesse d'avancement du dispositif et on aboutit ainsi à une pose régulière du film sur le sol ou sur des arceaux. Les risques que le film posé présente des plis sont par conséquent éliminés. Par ailleurs, cette caractéristique a pour conséquence de réduire le nombre de pièces utilisées pour le positionnement de la bobine sur le dispositif. En effet, les dispositifs connus de l'état de la technique font intervenir de nombreux éléments organisés de façon complexe pour tenter d'obtenir un déroulement synchrone du film en fonction du déplacement. Il est à noter que les roues de blocage utilisées pour le maintien de la bobine de film peuvent éventuellement être montées en rappel sur ressort de façon à faciliter le positionnement puis le blocage de la bobine.

Le dispositif comporte encore, positionné à l'arrière des organes 6 de positionnement du film dans le sol, des organes 7 de fermeture de la tranchée. Ces organes 7 de fermeture de la tranchée sont constitués respectivement d'un organe rotatif circulaire porteur, tel qu'une roue ou un disque aidant au déplacement du châssis 2 sur le sol. Dans les exemples représentés, ces organes 7 de fermeture de la tranchée sont constitués par une roue équipée d'un pneumatique. Ces organes rotatifs circulaires présentent une "inclinaison divergente" pour fermer par simple pression d'appui la fente 4 sur le bord de laquelle ils se déplacent. On entend dans la présente description les termes inclinaison divergente comme désignant l'inclinaison selon laquelle, dans une position donnée, la partie supérieure des roues est plus éloignée de l'axe de déplacement du dispositif que la partie inférieure de celles-ci en contact avec le sol. Ces organes 7 rotatifs circulaires de fermeture de la tranchée présentent en outre un pincement orienté dans le sens S de déplacement du dispositif. Dans la présente description, on entend les termes "pincement orienté dans le sens de déplacement du dispositif" comme désignant un pincement correspondant à une position des roues l'une par rapport à l'autre telle que leur plan de rotation se croise à l'avant du dispositif dans le sens de déplacement de celui-ci. Les organes de fermeture de la tranchée concourent donc non seulement au déplacement du châssis 2 en constituant des roues porteuses du châssis, mais également à la fermeture de la tranchée lors de l'avancement du dispositif. On constate en fait que ni le pincement, ni l'inclinaison des roues cumulée à ce pincement ne gênent le déplacement du dispositif et n'empêchent ces roues d'assurer leur fonction dans la progression du dispositif lors de son utilisation. Bien sûr le pincement des roues et leur inclinaison ne devront pas dépasser des valeurs angulaires raisonnables correspondant à environ 45° par rapport à l'axe de déplacement du dispositif en ce qui concerne le pincement et également environ 45° par rapport à la verticale en ce qui concerne l'inclinaison des roues. Bien évidemment les valeurs angulaires de pincement et d'inclinaison peuvent être réglées au moyen de dispositifs appropriés qui ne seront pas décrits en détail car ils sont bien connus à ceux versés dans cet art.

Pour parfaire le dispositif et en particulier la tension du film lors de sa dépose sur le sol, le dispositif comporte en outre des moyens de maintien du film 1 à l'état tendu contre la surface 3 à recouvrir. Ces moyens de maintien sont constitués d'un rouleau 12 disposé entre les rangées d'outils perpendiculairement à ces dernières. Ce rouleau 12 est monté libre à pivotement par rapport au châssis 2 autour d'un axe parallèle à l'axe YY' de rotation des organes 6 rotatifs de positionnement du film dans le sol. Ce rouleau 12 de maintien du film 1 à l'état tendu est disposé sensiblement dans, ou légèrement en arrière, du plan vertical passant par les axes YY' de rotation des organes 6 rotatifs circulaires de positionnement du film dans le sol de manière à plaquer le film 1 contre la surface 3 à recouvrir.

Bien évidemment, dans le cas d'une pose d'un film sur arceaux, les moyens de maintien du film seront adaptés. Il est à noter que les moyens de stockage du film qui sont ici représentés sous forme d'une bobine positionnée sur le châssis de façon à ce que son axe de rotation soit perpendiculaire à l'axe de déplacement du dispositif pourraient également être constitués d'un réceptacle dans lequel le film serait plié, un tel réceptacle pouvant par exemple être utilisé dans le cas du déroulement d'un film de récupération. De même, on pourra compléter à l'envie ce dispositif notamment au moyen d'un dispositif de guidage incluant notamment des capteurs de position du dispositif par rapport au sol ou par rapport à des arceaux plantés dans le sol. Ces dispositifs de guidage incluent généralement également un système de commande du déport du dispositif permettant d'ajuster le déplacement du dispositif en fonction de signaux transmis par le capteur. De cette façon, le positionnement et particulièrement le centrage du film n'ont plus à être contrôlés de façon continue par l'opérateur. Un tel dispositif de guidage ne sera pas décrit plus en détail car il a d'ores et déjà été décrit dans le brevet FR-A-2.693.625.

Le fonctionnement du dispositif représenté à la figure 1 est particulièrement simple. Le film stocké à l'état bobiné est positionné sur le châssis. Pour ce faire, la bobine est introduite entre les roues 9 et 10 de blocage et les plaques latérales 11. Une fois positionné, le film est déroulé pour venir recouvrir au moins une partie de la tranche des disques 6 de manière à initialiser l'opération de dépose du film. Ce film est déroulé bien évidemment de manière à recouvrir la tranche avant du disque 6. Le châssis tracté au moyen d'un véhicule tracteur est alors déplacé dans le sens représenté par la flèche S à la figure 1. Les coutres réalisent au moyen de leur bord d'attaque 5A deux fentes 4 dans le sol. Les roues 6 pénètrent dans les fentes ainsi ménagées en déposant par contact d'appui de leur tranche sur le film 1 des portions latérales du film dans ladite fente. Les roues 7 de fermeture des fentes 4 entrent alors en jeu pour refermer l'ouverture de la fente par simple pression exercée sur le bord de ladite fente. Le film ainsi déposé est parfaitement maintenu dans le sol et également parfaitement tendu. Pour procéder à l'enlèvement du film, il suffira de tirer sur ce film dont les bords latéraux, simplement positionnés à l'état sensiblement vertical dans les fentes 4 s'extrairont sans difficulté de ces fentes 4. On note que, dans ce dispositif, le coutre 5 et le disque 6 travaillent à des profondeurs de travail supérieures à celles de l'organe 7 de fermeture de la tranchée. Généralement, l'organe 5 d'ouverture de tranchée et l'organe 6 de positionnement du film dans le sol travaillent à la même profondeur. Grâce à un tel dispositif, il devient aisé de poser des films y compris dans des terrains difficiles tels que des terrains caillouteux ou autres.

## Revendications

1. Dispositif pour la pose d'un film (1) plastique ou similaire, notamment à usage agricole, ce dispositif comprenant un châssis (2) se déplaçant sur le sol, ce châssis (2) étant équipé de deux rangées d'outils (5, 6, 7) parallèles, écartées l'une de l'autre d'une distance (D) correspondant sensiblement à la largeur de la surface (3) à recouvrir d'un film (1), chaque rangée d'outils étant constituée successivement de l'avant vers l'arrière du châssis (2), pris dans le sens (S) d'avancement du châssis (2), d'un organe (5) d'ouverture d'une tranchée dans le sol, d'un organe (6) rotatif circulaire de positionnement d'un bord latéral (1A) du film (1) dans ladite tranchée par contact d'appui sur ledit film (1) et d'un organe (7) de fermeture de la tranchée,
**caractérisé en ce que** les organes (5) d'ouverture de la tranchée sont constitués respectivement par un organe, tel qu'un coutre ou un disque droit équipé d'au moins un bord ou d'une arête de coupe agencé(e) pour découper sensiblement verticalement le sol lors de l'avancement du châssis de manière à délimiter, dans le sol, une fente (4) formant tranchée, ces organes (5) d'ouverture de la tranchée étant disposés sensiblement alignés avec les organes (6) de positionnement du film (1) constitués de disques droits à plans de rotation sensiblement parallèles pour permettre, lors de la pénétration axiale des disques (6) dans les fentes, par contact d'appui de la tranche (6A) du disque (6) avec le film (1), la dépose des bords latéraux (1A) du film (1) à l'état replié dans ladite fente (4), ces organes (6) rotatifs circulaires de positionnement du film dans le sol coopérant avec des moyens (9, 10, 11) permettant de positionner directement le film, stocké à l'état bobiné, sur lesdits organes (6) rotatifs, de sorte que ces organes (6) rotatifs de positionnement du film constituent en outre des moyens d'entraînement et de déroulement du film (1) lors d'un entraînement en rotation desdits organes (6) rotatifs de positionnement provoqué par l'avancement du châssis (2).

2. Dispositif selon la revendication 1,
**caractérisé en ce que** chaque organe (5) d'ouverture d'une tranchée est un coutre dont le profil du bord (5A) arrière est courbe, le centre de l'arc de cercle définissant la courbe du bord (5B) arrière du coutre étant commun et sensiblement identique au centre de l'arc de cercle définissant la frontière du disque (6) rotatif circulaire de positionnement d'un bord latéral du film (1) dans une fente (4) formant tranchée de manière à éviter tout comblement de la fente (4) entre organe (5) d'ouverture de tranchée et organe (6) de positionnement du film (1) au cours de l'avancement du châssis (2).

3. Dispositif selon l'une des revendications 1 et 2,
**caractérisé en ce que** chaque organe (5) d'ouverture d'une tranchée est un coutre dont le bord d'attaque (5A) ou arête de coupe s'étendant dans un plan vertical est incliné vers l'arrière du châssis (2) en direction de l'organe (6) de positionnement du film (1).

4. Dispositif selon l'une des revendications 1 à 3,
**caractérisé en ce que** chaque organe (5) d'ouverture d'une tranchée est muni sur son côté externe d'un déflecteur (16) agencé pour recouvrir au moins partiellement un secteur circulaire dit actif du plan circulaire externe de l'organe (6) rotatif circulaire de positionnement du film (1) de manière à retenir la terre et l'empêcher de descendre le long dudit organe (6) de positionnement du film (1).

5. Dispositif selon l'une des revendications 1 à 4,
**caractérisé en ce que** chaque organe (6) rotatif circulaire de positionnement de film (1) dans une fente (4) du sol formant tranchée est relié au châssis par l'intermédiaire d'un organe de liaison, tel qu'un bras (8), monté à pivotement autour d'un axe (XX') parallèle à l'axe (YY') de rotation de l'organe (6) rotatif circulaire pour permettre audit organe (6) rotatif circulaire de suivre parfaitement le profil de la fente (4) formant tranchée.

6. Dispositif selon l'une des revendications 1 à 5,
**caractérisé en ce que** l'organe (6) rotatif circulaire de positionnement de film (1) dans une fente (4) est doublé extérieurement d'un bras (17) courbe conformé pour venir en appui dans la fente (4) formant tranchée, le bras (17) oscillant, monté à pivotement autour d'un axe parallèle à l'axe (YY') de rotation de l'organe (6) rotatif, étant rappelé en position d'appui par l'intermédiaire d'un organe approprié.

7. Dispositif selon l'une des revendications 1 à 6,
**caractérisé en ce que** les organes (7) de fermeture de la tranchée sont constitués respectivement d'un organe rotatif circulaire porteur, tel qu'une roue ou un disque aidant au déplacement du châssis (2) sur le sol, ces organes rotatifs circulaires présentant une "inclinaison divergente" pour fermer par simple pression d'appui la fente (4) sur le bord de laquelle ils se déplacent.

8. Dispositif selon la revendication 7,
**caractérisé en ce que** les organes (7) rotatifs circulaires de fermeture de la tranchée présentent un pincement orienté dans le sens (S) de déplacement du dispositif.

9. Dispositif selon l'une des revendications 1 à 8,
**caractérisé en ce qu'**il comporte en outre des moyens de maintien du film (1) à l'état tendu contre la surface (3) à recouvrir, ces moyens de maintien étant constitués d'un rouleau (12) disposé entre les rangées d'outils perpendiculairement à ces dernières, ce rouleau (12) étant monté libre à pivotement par rapport au châssis (2) autour d'un axe parallèle à l'axe (YY') de rotation des organes 6 rotatifs de positionnement du film dans le sol.

10. Dispositif selon la revendication 9,
**caractérisé en ce que** le rouleau (12) de maintien du film (1) à l'état tendu est disposé sensiblement dans, ou légèrement en arrière, du plan vertical passant par les axes (YY') de rotation des organes (6) rotatifs circulaires de positionnement du film dans le sol de manière à plaquer le film (1) contre la surface (3) à recouvrir.

## Claims

1. Device for laying a plastic film (1) or the like, in particular for agricultural use, this device comprising a chassis (2) moving over the ground, this chassis (2) being equipped with two parallel rows of tools (5, 6, 7) separated from one another by a distance (D) essentially corresponding to the width of the surface (3) to be covered by a film (1), each row of tools being made up of, successively from the front to the rear of the chassis (2), taken in the direction (D) of forward movement of the chassis (2), an element (5) for opening a trench in the ground, a circular rotary element (6) for positioning a side edge (1A) of the film (1) in the said trench by bearing contact on the said film (1) and an element (7) for closing the trench,
**characterised in that** the elements (5) for opening the trench consist of, respectively, an element such as a coulter or a vertical disc equipped with at least one edge or a cutting edge equipped for cutting the ground essentially vertically during the forward movement of the chassis so as to delimit, in the ground, a slit (4) forming the trench, these elements (5) for opening the trench being arranged essentially aligned with the elements (6), for positioning the film (1), consisting of vertical discs having essentially parallel planes of rotation in order to allow the side edges (1A) of the film to be laid down in the folded state in the said slit (4) during the axial penetration of the discs (6) into the slits, by bearing contact of the edge (6A) of the disc (6) with the film (1), these circular rotary elements (6) for positioning the film in the ground interacting with means (9, 10, 11) enabling the film, stored wound on a reel, to be positioned directly on the said rotary elements (6), such that these rotary elements (6) for positioning the film also constitute means for feeding and unwinding the film (1) during rotational driving of the said rotary positioning elements (6) caused by the forward movement of the chassis (2).

2. Device according to Claim 1,
**characterised in that** each element (5) for opening a trench is a coulter, the rear edge (5A) (sic) profile of which is curved, the centre of the arc defining the curve of the rear edge (5B) of the coulter being common and essentially identical to the centre of the arc defining the front of the circular rotary disc (6) for positioning a side edge of the film (1) in a slit forming the trench so as to prevent any filling up of the slit (4) between element (5), for opening a trench, and element (6), for positioning the film (1), during the forward movement of the chassis (2).

3. Device according to one of Claims 1 and 2,
**characterised in that** each element (5) for opening a trench is a coulter, the leading edge (5A) or cutting edge of which extending in a vertical plane is inclined towards the rear of the chassis (2) in the direction of the element (6) for positioning the film (1).

4. Device according to one of Claims 1 to 3,
**characterised in that** each element (5) for opening a trench is fitted on its outside with a deflector (16) equipped to at least partially cover a circular sector, termed the active sector, of the external circular plane surface of the circular rotary element (6) for positioning the film (1) so as to hold back the soil and prevent it from dropping down along the said element (6) for positioning the film (1).

5. Device according to one of Claims 1 to 4,
**characterised in that** each circular rotary element (6) for positioning film (1) in a slit (4) in the ground forming the trench is connected to the chassis via a linking element, such as an arm (8), mounted such that it pivots about an axis (XX') parallel to the axis (YY') of rotation of the circular rotary element (6) to allow the said circular rotary element (6) perfectly to follow the profile of the slit (4) forming the trench.

6. Device according to one of Claims 1 to 5,
**characterised in that** the circular rotary element (6) for positioning film (1) in a slit (4) is overlapped on the outside by a curved arm (17) shaped to come to bear in the slit (4) forming the trench, the oscillating arm (17), mounted such that it pivots about an axis parallel to the axis (YY') of rotation of the rotary element (6), being brought back into the bearing position by means of an appropriate element.

7. Device according to one of Claims 1 to 6,
**characterised in that** the elements (7) for closing the trench each consist of a carrier circular rotary element, such as a wheel or a disc assisting the movement of the chassis (2) over the ground, these circular rotary elements having a "divergent inclination" in order to close the slit (4), on the edge of which they are moving, by means of simple contact pressure.

8. Device according to Claim 7,
**characterised in that** the circular rotary elements (7) for closing the trench have a toe-in oriented in the direction (D) of movement of the device.

9. Device according to one of Claims 1 to 8,
**characterised in that** it also comprises means for holding the film (1) taut against the surface (3) to be covered, these holding means consisting of a roller (12) arranged between the rows of tools perpendicularly to the latter, this roller (12) being mounted such that it is free to pivot with respect to the chassis (2) about an axis parallel to the axis (YY') of rotation of the rotary elements 6 for positioning the film in the ground.

10. Device according to Claim 9,
**characterised in that** the roller (12) for holding the film (1) taut is arranged essentially in, or slightly behind, the vertical plane passing through the axes (YY') of rotation of the circular rotary elements (6) for positioning the film in the ground so as to press the film (1) against the surface (3) to be covered.

## Patentansprüche

1. Vorrichtung zum Auflegen einer Kunststoffolie oder dergleichen, insbesondere zum landwirtschaftlichen Gebrauch, wobei diese Vorrichtung ein Gestell (2) umfaßt, das sich auf dem Boden bewegt, wobei dieses Gestell (2) mit zwei parallelen Werkzeugreihen (5, 6, 7) bestückt ist, die um einen Abstand (D) zueinander beabstandet sind, der in etwa der Breite der mit einer Folie (1) abzudeckenden Fläche (3) entspricht, wobei jede Werkzeugreihe von der Vorderseite zur Rückseite des Gestells (2), in der Richtung (S) der Vorwärtsbewegung des Gestells (2) gesehen, aufeinanderfolgend aus einem Organ (5) zum Öffnen eines Grabens im Boden, aus einem kreisförmigen Drehorgan (6) zur Positionierung eines Seitenrands (1a) der Folie (1) in dem besagten Graben durch Auflagekontakt auf der besagten Folie (1) und aus einem Organ (7) zum Schließen des Grabens besteht,
**dadurch gekennzeichnet, daß** die Organe (5) zum Öffnen des Grabens jeweils aus einem Organ, wie etwa einem Sech oder einer geraden Scheibe mit wenigstens einem Schneidrand oder einer Schneidkante bestehen, der bzw. die angeordnet ist, um den Boden bei der Vorwärtsbewegung des Gestells in etwa vertikal aufzuschneiden, um im Boden einen einen Graben bildenden Spalt (4) zu begrenzen, wobei diese Organe (5) zum Öffnen des Grabens in etwa auf die Organe (6) zur Positionierung der Folie (1) ausgerichtet angeordnet sind, die aus geraden Scheiben mit in etwa parallelen Drehebenen bestehen, um beim axialen Eindringen der Scheiben (6) in die Spalte durch Auflagekontakt der Kante (6A) der Scheibe (6) mit der Folie (1) das Ablegen der Seitenränder (1A) der Folie (1) im gefalteten Zustand in dem besagten Spalt (4) zu ermöglichen, wobei diese kreisförmigen Drehorgane (6) zur Positionierung der Folie im Boden mit Mitteln (9, 10, 11) zusammenwirken, die eine direkte Positionierung der Folie ermöglichen, die im aufgewickelten Zustand auf den besagten Drehorganen (6) gelagert ist, so daß diese Drehorgane (6) zur Positionierung der Folie außerdem Mittel zum Vorziehen und Abwickeln der Folie (1) bei einem durch die Vorwärtsbewegung des Gestells (2) bewirkten Drehantrieb der besagten Positionierdrehorgane (6) bilden.

2. Vorrichtung nach Anspruch 1,
**dadurch gekennzeichnet, daß** jedes Organ (5) zum Öffnen eines Grabens ein Sech ist, dessen Profil des hinteren Rands (5A) gekrümmt ist, wobei der Mittelpunkt des die Krümmung des hinteren Rands (5B) des Sechs definierenden Kreisbogens gemeinsam und in etwa identisch mit dem Mittelpunkt des Kreisbogens ist, der die Grenze der kreisförmigen Drehscheibe (6) zur Positionierung eines Seitenrands der Folie (1) in einem einen Graben bildenden Spalt (4) definiert, um jede Verfüllung des Spalts (4) zwischen dem Organ (5) zum Öffnen eines Grabens und dem Organ (6) zur Positionierung der Folie (1) bei der Vorwärtsbewegung des Gestells (2) zu verhindern.

3. Vorrichtung nach einem der Ansprüche 1 und 2,
**dadurch gekennzeichnet, daß** jedes Organ (5) zum Öffnen eines Grabens ein Sech ist, dessen sich in einer vertikalen Ebene erstreckende Eintrittskante (5A) oder Schneidkante zur Rückseite des Gestells (2) in Richtung des Organs (6) zur Positionierung der Folie (1) geneigt ist.

4. Vorrichtung nach einem der Ansprüche 1 bis 3,
**dadurch gekennzeichnet, daß** jedes Organ (5) zum Öffnen eines Grabens an seiner Außenseite mit einem Abweiser (16) versehen ist, der angeordnet ist, um wenigstens teilweise einen als Wirksektor bezeichneten Kreissektor der äußeren Kreisebene des kreisförmigen Drehorgans (6) zur Positionierung der Folie (1) abzudecken, um die Erde zurückzuhalten und sie daran zu hindern, an dem besagten Organ (6) zur Positionierung der Folie (1) entlang abzusinken.

5. Vorrichtung nach einem der Ansprüche 1 bis 4,
**dadurch gekennzeichnet, daß** jedes kreisförmige Drehorgan (6) zur Positionierung der Folie (1) in einem einen Graben bildenden Spalt (4) des Bodens mit dem Gestell über ein Verbindungsorgan, wie etwa einen Arm (8), verbunden ist, das drehbar um eine zur Drehachse (YY') des kreisförmigen Drehorgans (6) parallele Achse (XX') gelagert ist, um es dem besagten kreisförmigen Drehorgan (6) zu ermöglichen, dem Profil des einen Graben bildenden Spalts (4) einwandfrei zu folgen.

6. Vorrichtung nach einem der Ansprüche 1 bis 5,
**dadurch gekennzeichnet, daß** das kreisförmige Drehorgan (6) zur Positionierung der Folie (1) in einem Spalt (4) außen durch einen gekrümmten Arm (17) flankiert ist, der so gestaltet ist, daß er in dem einen Graben bildenden Spalt (4) zur Anlage kommt, wobei der um eine zur Drehachse (YY') des Drehorgans (6) parallele Achse drehbar gelagerte Schwenkarm (17) über ein geeignetes Organ in die Anlageposition zurückgestellt wird.

7. Vorrichtung nach einem der Ansprüche 1 bis 6,
**dadurch gekennzeichnet, daß** die Organe (7) zum Schließen des Grabens jeweils aus einem kreisförmigen rotierenden Trägerorgan, etwa einem Rad oder einer Scheibe, bestehen, das an der Bewegung des Gestells (2) auf dem Boden mitwirkt, wobei diese kreisförmigen rotierenden Organe eine "divergierende Neigung" aufweisen, um durch einfachen Anlagedruck den Spalt (4), an dessen Rand sie sich bewegen, zu schließen.

8. Vorrichtung nach Anspruch 7,
**dadurch gekennzeichnet, daß** die kreisförmigen Drehorgane (7) zum Schließen des Grabens eine in Richtung (S) der Bewegung der Vorrichtung ausgerichtete Vorspur aufweisen.

9. Vorrichtung nach einem der Ansprüche 1 bis 8,
**dadurch gekennzeichnet, daß** sie außerdem Mittel zum Halten der Folie (1) im gespannten Zustand gegen die abzudeckende Fläche (3) umfaßt, wobei diese Haltemittel aus einer Rolle (12) bestehen, die zwischen den Werkzeugreihen senkrecht zu diesen angeordnet ist, wobei diese Rolle (12) im Verhältnis zum Gestell (2) frei drehbar um eine zur Drehachse (YY') der Drehorgane (6) zur Positionierung der Folie im Boden parallele Achse gelagert ist.

10. Vorrichtung nach Anspruch 9,
**dadurch gekennzeichnet, daß** die Rolle (12) zum Halten der Folie (1) im gespannten Zustand in etwa in oder etwas hinter der vertikalen Ebene angeordnet ist, die durch die Drehachsen (YY') der kreisförmigen Drehorgane (6) zur Positionierung der Folie im Boden verläuft, um die Folie (1) an die abzudeckende Fläche (3) anzudrücken.
